# EUROPEAN PATENT APPLICATION

(11) **EP 1 246 479 A1**
(43) Date of publication of application: **02.10.2002**
(21) Application number: 01302759.4
(22) Date of filing: 26.03.2001
(51) Int. Cl.: H04Q 7/22, H04L 12/56

(54) **GPRS mobile telecommunications systems**

(71) Applicant: LUCENT TECHNOLOGIES INC., Murray Hill, New Jersey 07974-0636 (US)
(72) Inventor: Giustina, Andrea, Wiltshire SN25 4YA (GB); Martin-Leon, Silvia, Wiltshire SN4 4GD (GB); Sharma, Rajiv, Wiltshire SN25 1WZ (GB)
(74) Representative: Sarup, David Alexander

(57) **Abstract**

In order to establish a reliable connection with a mobile station in a GS3A/GPRS system for external packet services initiated from an external packet data network (PDN), the GGSN acting as a gateway to the external data network maintains a table associating the IMSI of each mobile station with the PDP address for each context activated for the respective mobile station. The information is compiled in the GGSN from data obtained when individual mobile stations initiate a context activation procedure. Contexts are activated according to GSM standard 03.60. The table also includes the Access Point Name (APN) for each connected PDN, the last recorded SGSN together with time of recording, and entries relating to non-reachable mobile stations. These items are updated during the course of context activation procedures.

## Description

This invention relates to mobile telecommunications systems providing packet switched services.

Mobile telecommunications systems, or personal communications systems (PCS), are commonly used both for speech services provided on a circuit switched basis, and for data services provided on a packet switched basis. For example, the GSM system has the GPRS (General Packet Radio Service) for packet switched services. However the present invention has application to any mobile or personal telecommunications system providing packet switched services. In the present specification, the following abbreviations and terminology are used:
- APN: Access Point Name
- BSS: Base Station System
- CS: Circuit Switched
- DNS: Domain Name Server
- GGSN: Gateway GPRS Support Node
- GPRS: General Packet Radio Service
- GTP: GPRS Tunnelling Protocol
- GSN: GPRS Support Node
- GSM: Global System for Mobile Communication
- HLR: Home Location Register
- IMSI: International Mobile Subscriber Identity
- IP: Internet Protocol
- MNRG: Mobile Station not Reachable for GPRS
- MNRR: Mobile Station not Reachable Reason
- MS: Mobile Station
- O&M: Operations and Maintenance
- PCU: Packet Control Unit
- PDN: Packet Data Network
- PDP: Packet Data Protocol
- PDU: Protocol Data Unit
- SGSN: Serving GPRS Support Node

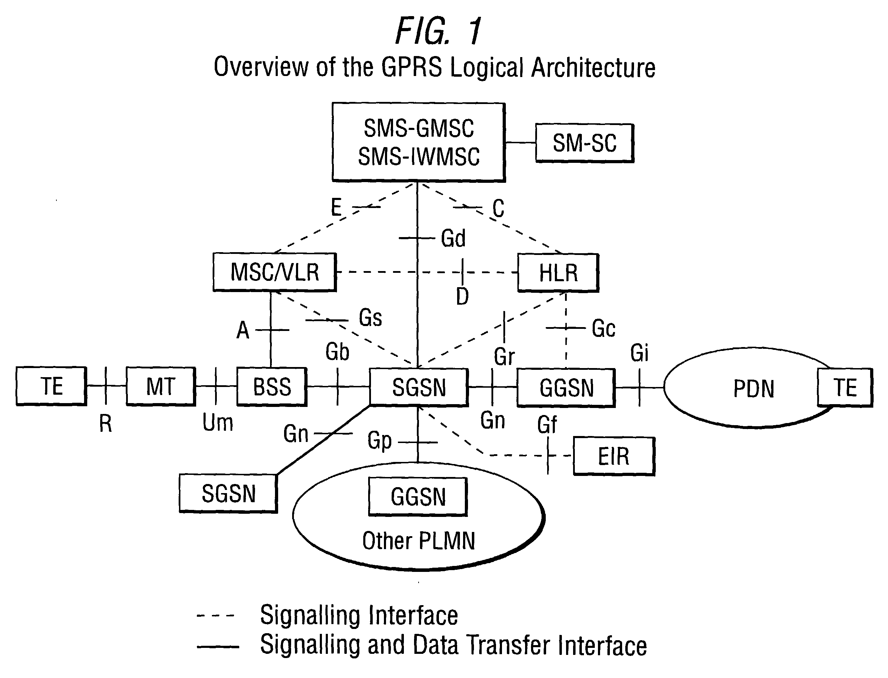

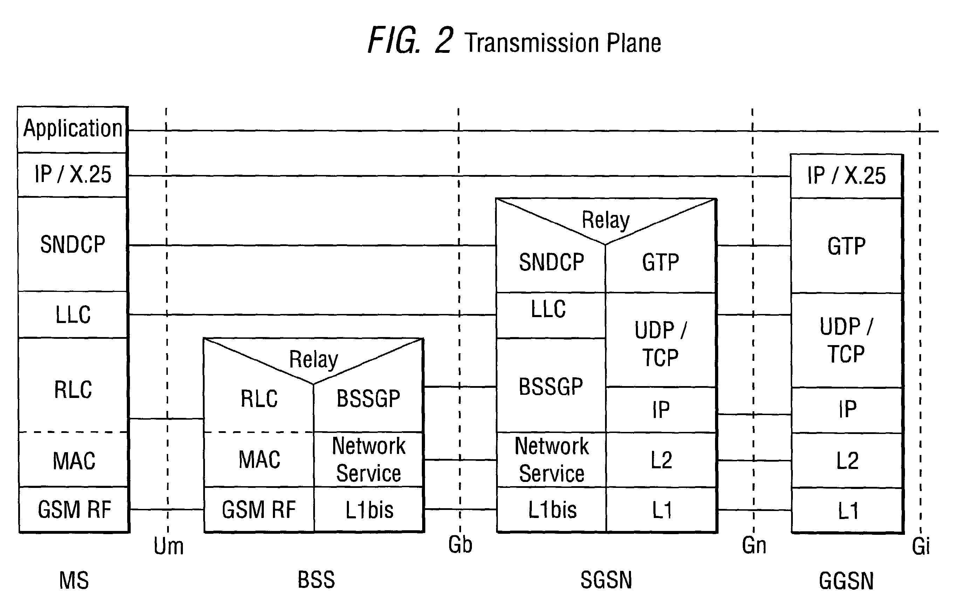

In GSM, each mobile station (MS) is equipped with an International Mobile Subscriber Identity (IMSI) which is used to connect speech (CS) services. In GPRS however, the IMSI is not appropriate to use as an identifying address where the GSM (GPRS) system is connected to an external packet data network (PDN), e.g. the Internet or X.25, which uses a different addressing mechanism. GSM Standard 03.60 defines PDP (Packet Data Protocol) Contexts, in which the GPRS creates a set of parameters which permit the MS to interface with the external PDN. In particular a PDP context defines a PDP address associated with the MS, usually in the same format as the address for the external PDN, e.g. IPv.4, Ipv.6, or X.121. GSM Standard 09.60 defines in more detail the Context address fields. Reference is made to Figures 1 and 2 showing the logical architecture and transmission plane of GPRS, from which it may be seen that there is a direct application link at the uppermost network layer between the MS and the external PDN, and a lower X.25/ IP link between the MS and GGSN.

GPRS introduces the connection of external packet data networks to GSM networks via a Serving GPRS Support Node (SGSN) and a Gateway GPRS Support Node (GGSN). This allows the network to introduce new services to the mobile subscriber. Some of these are services that originate from the external packet data network. Thus it is required that packet data units (PDUs) can be sent from the external packet data network to the mobile network before the user has initiated a session. These PDUs will first arrive at the GGSN. The GGSN connects to external networks (PDN) over an interface and can act as a firewall to prevent unwanted access. It connects to SGSN which support the mobile stations. It also counts the data/packets for billing or charging purposes. The SGSN controls the BSS, together serving the attached mobile stations and controlling mobility management functions. They are concerned with radio channel allocations, power levels and other quality of service matters.

PDUs that arrive at the GGSN have a Packet Data Protocol (PDP) address in the header. The PDP address relates to a mobile station (MS). In order for the PDU to be delivered, a PDP context must be active in the GGSN (i.e. valid PDP context information must be present in the GGSN). If a PDP context is not active for the PDP address, the GGSN can activate the procedure "Network requested PDP context activation" which is described in its main functionalities in the ETSI standard GSM 03.60 v 6.60, Para. 9.2.2.2. PDP context values are stored at the MS, SGSN and GGSN. Typically the GGSN will include, after context activation, the following values: IMSI of MS; PDP type and PDP address; QoS (Quality of Service); IP address of SGSN; access point name of PDN; etc.

To send the messages required for the Network-Requested PDP Context Activation Procedure, the GGSN is required to have the International Mobile Subscriber Identity (IMSI) that identifies the MS that the PDP address relates to. It must be included as part of the message information. Therefore, there must be information stored in the GGSN that can identify the IMSI of a MS for a given PDP Address.

The GGSN must also know which SGSN to forward the message to, since there may be many. It can either request the SGSN's address from the Home Location Register (the HLR holds information about the temporary location of the MS) or, as the standards suggest, this information may also be cached in the GGSN from previous data sessions or from other PDP contexts active for the same user. In the latter case, when a PDU arrives from the external PDN, the message can be sent directly to the SGSN without unnecessarily interrogating the HLR.

Thus, when a PDU arrives, if a PDP context is not active for it, the GGSN should be able to request the MS to set up a PDP context so that the PDU can be delivered. To do this, the GGSN must get information about the IMSI that the PDP address relates to and also get the address of the SGSN that the MS is attached to. The method to make available IMSI information for each PDP in the GGSN is not standardised.

### Summary of the Invention

In a first aspect, the invention provides in a mobile telecommunications system providing packet switched services, a method of connecting mobile stations (MS) to a packet data network (PDN) external to the system, comprising:
providing a gateway control means (GGSN) which receives packet data units (PDU) from the external data network for routing to a selected mobile station;
providing the selected mobile station with a system address (IMSI) for enabling the gateway control means to establish a connection with the mobile station, and a packet address (PDP) to enable packet data units to be routed to the mobile station; and
providing the gateway control means with a table means identifying mobile stations within the system and linking the system address of each such mobile station with a respective packet address.

Information can be entered manually into the table means with O&M commands from a local management system or from the centralised Operation and Maintenance System (OMC), but this would be an arduous task, since there are likely to be many mobiles in the mobile network and each may have more than one PDP address. Also, information about the SGSN address to which the MS is attached may not be available. As preferred therefore, the information is obtained from requests initiated by such mobile stations for external packet data services.

In a second aspect, the invention provides in a mobile telecommunications system providing packet switched services, a method of connecting mobile stations (MS) to a packet data network (PDN) external to the system, comprising:
providing a gateway control means (GGSN) which receives packet data units (PDU) from the external data network for routing to a selected mobile station;
providing the selected mobile station with a system address (IMSI) for enabling the gateway control means to establish a connection with the mobile station, and a packet address (PDP) to enable packet data units to be routed to the mobile station; and
the gateway control means obtaining and storing information linking the system address of mobile stations within the system with respective packet addresses, the information being obtained from requests initiated by such mobile stations for external packet data services.

In a preferred embodiment, entries are initially made into the GGSN during an MS initiated PDP Context Activation Procedure. During the PDP context activation procedure GSM 03.60 v 6.60, Para. 9.2.2.1(initiated by the MS), the SGSN sends a "Create PDP Context Request" message to the GGSN. The static PDP address (i.e. the PDP address of the MS created when the mobile subscription is set up) will be contained in this request if this is the type of context the MS requires. For the mechanism to work reliably over time, the PDP address is a static IP address, as opposed to a dynamically allocated address. At this point, the GGSN shall store the PDP Address and its associated IMSI. All the information is stored in a table as described below.

In accordance with the invention existing messages received by the GGSN, are employed to build the PDP addresses to IMSI table, without the need of explicit OA&M commands. The IMSI of the MS that a PDP address relates to is stored when a PDP context activation attempt occurs in the GGSN for that static PDP address. This is beneficial because it makes use of existing messages that are sent to the GGSN and will occur automatically when each user attempts to activate a PDP context. This prevents manual entering of data so the system effectively learns the information itself.

The table means preferably stores the SGSN address associated with each MS, and a time indication of whether the SGSN address is valid. If the table does not have a valid SGSN address, then the GGSN will interrogate the HLR for such information.

As preferred, the table means also stores the access point name (APN). This provides a reference point or identifying address for the external network. This is of use where the GGSN is connected to more than one external data network (PDN) using overlapping addressing spaces. In such case the PDP address is not unique, and there could be more than one mapping to an IMSI. The GGSN uses separate logical links to connect to each of the PDNs. Each PDN is identified by an APN, which is a logical name.

In a third aspect, the invention provides a mobile telecommunications system providing packet switched services, apparatus for connecting mobile stations (MS) to an external data network (PDN), comprising:
a gateway control means (GGSN) for receiving packet data units (PDU), from the external data network for routing to a selected mobile station;
the selected mobile station having a system address (IMSI) for establishing connection with the gateway control means and, the system having facility for associating a packet address with a mobile station for a selected packet data service; and
the gateway control means including a table means for mobile stations, which relates the system address to the or each packet address associated with each mobile station, together with an access point identifier employed in the system for the external data network.

### Brief Description of the Drawings

A preferred embodiment of the invention will now be described with reference to the accompanying drawings wherein:-
Figure 1 is a block schematic of the architecture of a GPRS system;
Figure 2 is a conceptual diagram of the transmission plane of a GPRS system;
Figure 3 is a schematic block diagram of a preferred embodiment of the invention;
Figure 4 is a flow chart showing the procedures of the preferred embodiment of the invention;
Figure 5 is a schematic of the procedure of the embodiment "send routing info for GPRS";
Figure 6 is a schematic of the procedure of the embodiment "PDU notification request";
Figure 7 is a schematic of the procedure of the embodiment "PDP context activation";
Figure 8 is a schematic of the procedure of the embodiment "failure report" and
Figure 9 is a schematic of the procedure of the embodiment "mobile user activity".

### Description of the Preferred Embodiment

New service applications are enabled by the Network Requested PDP Context Activation procedure in accordance with GSM 03.60. These services may be requested by the subscriber or may be services initiated by the operator. For example the subscriber may use a reminder service so that a message can be sent to the MS to remind the subscriber of an event listed in a schedule. Another such service for example may be used when the MS is in a given location area, e.g. arrival to an airport may result in delivering information on local hotels, transport, tourist information etc. being made available to the mobile subscriber. For such services, packets of data will arrive at a GGSN over a packet data network, before the user has established the required session (PDP Context). These IP packets will have an IP address in the header which is the static IP address for an MS. The GGSN must then be able to deliver the packet based on this information. To make this possible, the invention provides a table of information that is required in the GGSN and the procedures involved in attempting to deliver packets by setting up PDP contexts. There is the requirement for the availability of static IP addresses for this feature to work
PDP context activations are normally initiated from the MS. The Network-Requested PDP Context Activation procedure allows the GGSN to initiate the activation of a PDP context. When receiving a PDP PDU the GGSN checks if a PDP context is established for that PDP address. If no PDP context has been previously established, the GGSN may try to deliver the PDP PDU by initiating the Network-Requested PDP Context Activation procedure. The Network-Requested PDP Context Activation works by allowing the GGSN to send messages down to the MS to instruct it to initiate the PDP context activation. To do this, the GGSN must send a message to the SGSN that the MS is attached to. Therefore, the GGSN needs information about the SGSN's Address and the IMSI of the MS which is required to be included as part of this message. Thus, a table is created in accordance with the invention in the GGSN to map from the PDP Address included in the header of the PDP PDU, to the IMSI of the MS that the PDP PDU relates to, and the SGSN Address the MS is attached to.

Thus, when the PDP PDU arrives at the GGSN and no PDP context has already been established, the GGSN will look up the PDP address in the table and get its IMSI information. The GGSN then needs to inform the correct SGSN so that it can tell the MS to start the activation procedure. This information could be old or wrong so there is also information in the table to indicate how old the information is. Thus, if the information is old, the HLR can be queried about the SGSN that the MS is attached to. The SGSN that the MS is attached to may then be contacted with messaging procedures. The SGSN requests the MS to initiate the PDP context for that PDP address. The MS can now initiate PDP context activation in the MS, SGSN and GGSN so the PDU can be delivered. The HLR can be queried for location information and can be used to inform the GGSN of the activity of the MS.

The invention involves creating a table in the GGSN for information that is required to deliver the PDU. Additional information is also made available in the table to make PDP context activation attempts more efficient. The table maps PDP addresses and APN combinations to IMSIs and relevant location information. The table is called the Address Mapping Table. Essentially, it may be viewed as a two dimensional table with columns relating to PDP Address, APN, etc, and each row giving the IMSI, SGSN address, etc for the respective PDP Address/ APN combination. The Table has column entries to include:
- **PDP Address.** The PDP Address is the static IP address for the MS. When the packet of data arrives at the GGSN, it will have a PDP Address in the header which is used to identify the MS that the packet should be delivered to.
- **Access Point Name (APN).** The APN is used to identify the external network from which the packet originated. A private static IP address may be used for more than one MS if the packets of data originate from different networks. The Access Point Name (APN) is used to differentiate between these points so that the originating network can be identified and thus the correct MS.

### PDP Address has a mapping to each of the following:

- **International Mobile Subscriber Identity (IMSI).** The IMSI is the identification number for the MS that the PDP address relates to.
- **SGSN address.** This is the IP address for the SGSN that the MS was last attached to. This may not always be correct as it may not be the most up to date information.
- **Time Entry.** When a new entry or an update is made in the Address Mapping Table, a new Time Entry is made. This is a time stamp of when the change occurred. It is used to identify whether information about the PDP Address is valid. Information loses its validity after a given time has expired. The Time Entry applies to the SGSN Address and the Undeliverable Entry.
- **Mobile Station Not Reachable for GPRS flag (MNRG).** MNRG is a flag to indicate that the MS is unreachable and is applicable for all Mobile Station Not Reachable Reasons (MNRRs) except "No Paging Response". An entry "1" indicates that the MS is unreachable and "0" indicates that it is reachable.
- **Undeliverable Entry.** The Undeliverable Entry is used to indicate whether the Network Requested PDP Context Activation should be attempted. The entry can be "1" to indicate that PDP context activation has previously failed and should not be reattempted. The entry can be "0" to indicate that the PDP context can be attempted.

The Address Mapping Table is indexed using both PDP Addresses/ APN and IMSI information. The entries in the table relating to a PDP address are updated when the GGSN receives messages from the HLR or SGSN. The update procedures are described in Table 1 below. If an update is to be made for a PDP address/ APN regarding one MS, it will also occur for all PDP addresses/ APN with the same IMSI. Mobile stations can have more than one PDP address/ APN and this way, if for example an MS is unreachable, this information will be updated for all the PDP addresses that relate to that MS. Management of the Address Mapping table is described below and details how information initially gets into the table, how it is updated and how it is deleted.

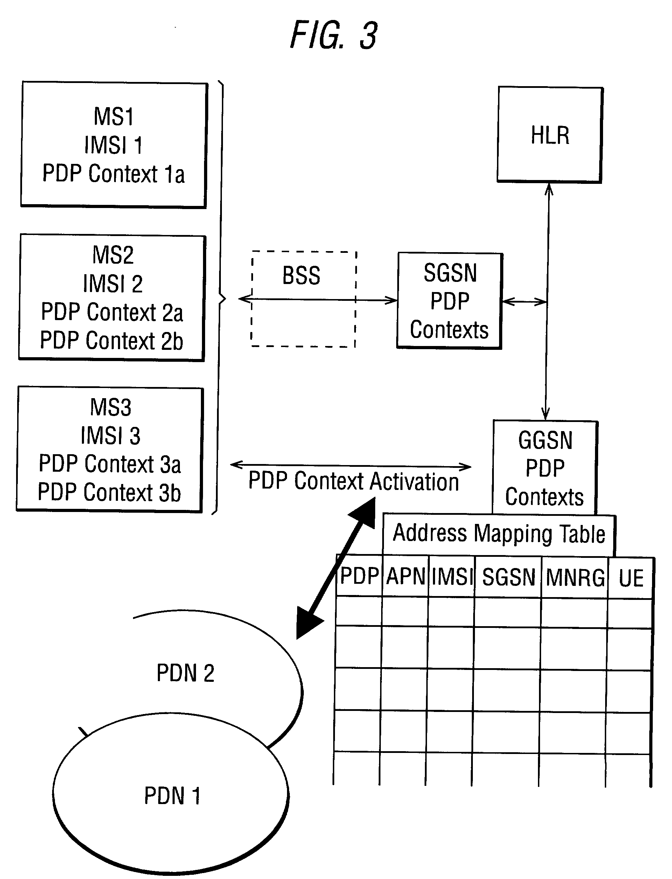

Referring to Figure 3, a preferred embodiment of the invention is shown in schematic form comprising a GPRS system, wherein a mobile station MSn has a SIM card with an IMSI address IMSIn, and one or more PDP Contexts PDPnq. The mobile stations communicate via BSS with a SGSN, by means of the GMM/SM protocol. The SGSN communicates with a GGSN by means of the GTP protocol. The GGSN communicates with the HLR by means of the MAP protocol, and with an external PDN by means of the appropriate IP or X.25 protocol for that PDN. When PDP contexts are activated, they are stored in the respective MS, the SGSN, and the GGSN. The GGSN stores the Address Mapping Table, shown as columns comprising PDP Address, APN, IMSI, SGSN Address, etc. Each row relates to a particular PDP Address/ APN combination. The **PDP Context Activation** procedures are carried out between the MS and GGSN, in accordance with Standard GSM 3.60, Para 9.2.2.2.

In use, entries are initially made into the Address Mapping Table of the GGSN from Activate PDP Context Requests initiated by the MS. During the PDP context activation procedure (initiated by the MS), the SGSN sends a Create PDP Context Request to the GGSN. The static PDP address will be contained in this request if this is the type of context the MS requires, together with the APN. At this point, a new entry is made to the table for the PDP Address/ APN combination, if it did not exist before. All other entries corresponding to this address are also made. The GGSN will update entries for PDP addresses/ APNs every time one of the messages listed below is received or when the message procedure described occurs. When a message is received that relates to a PDP address/ APN, it is looked up and entries for that PDP address are modified. Information is also updated for all PDP addresses with the same IMSI as the PDP address that the message relates to. If there is no entry for the PDP address/ APN, the update will be ignored unless it is a Create PDP Context Request. In this case, a new entry will be made for the PDP Address/ APN entry as described above. Some messages (i.e. MAP messages) arrive that relate to IMSIs only, in which case updates will be made for all PDP addresses/ APNs with that IMSI.

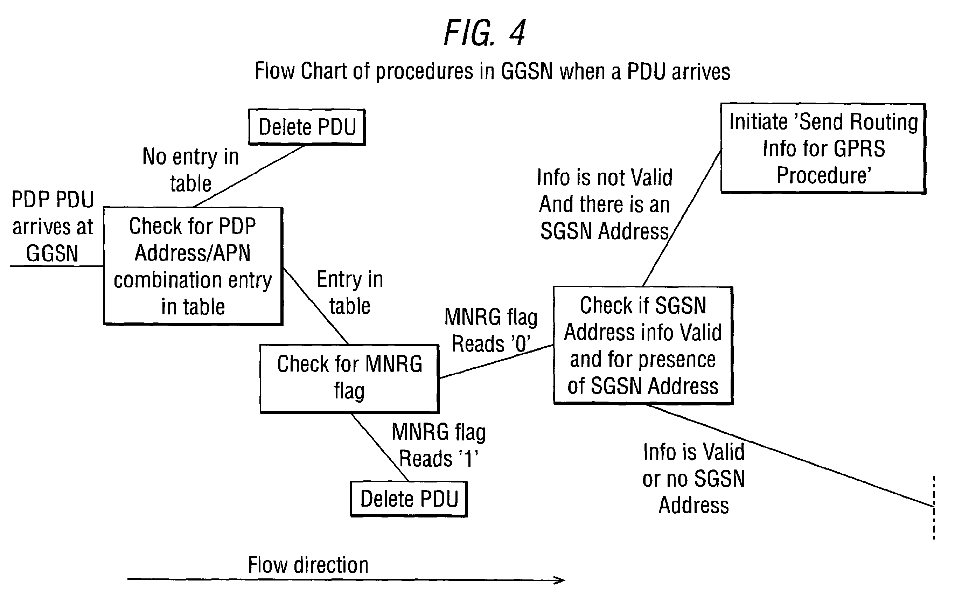

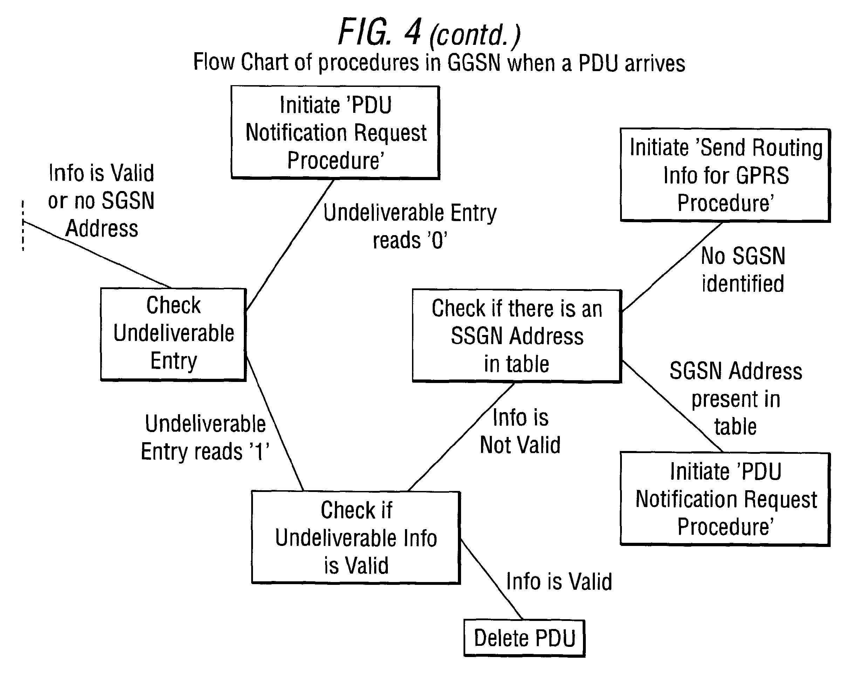

Referring to Figure 4, when a PDP PDU arrives at the GGSN, the following procedure is initiated. Initially, a PDP PDU arrives at the GGSN via a packet data network. In the header of the PDP PDU, there is the PDP address of the MS. The APN is obtained from the logical link the PDU arrives on. The GGSN checks if there is a PDP context with the same APN active for the PDP address. The state may be PDP Active, which is when there is valid PDP context information in the GGSN or PDP Inactive, which is when there is no PDP context in the GGSN. If the PDP context is active, the PDU may be delivered without further activation procedures.

Now, when the PDP context for a PDP PDU address is found to be inactive in the GGSN, it checks if the Network-Requested PDP Context Activation Procedure is enabled. If the procedure is disabled, the PDP PDU is deleted. If the procedure is enabled, the Address Mapping Table is queried for information it holds on that PDP address/APN combination. If there is no record of a PDP address with the relevant APN in the Address Mapping Table, then the PDU cannot be delivered and is deleted. If a record for the PDP address with relevant APN does exist, the GGSN checks for the presence of an MNRG flag.

If there is an MNRG flag (i.e. an entry '1'), the PDU is deleted. If there is no MNRG flag (i.e. an entry '0'), a check is made to establish if the information held about the PDP address is valid. This is done by comparing the time expired from when the Time Entry was made, against a configurable time parameter called TIME_SGSNADDRESS_INFO_VALID. If the time expired is greater than the parameter value, the SGSN address information is not valid. If the time expired is less than the parameter value, the SGSN address is considered valid. If the information held about the PDP address is not valid, the GGSN shall send a **Send Routing Information for GPRS message to the HLR.** If the information held is valid or the SGSN address is not present in the table, the Undeliverable Entry is checked in the table. If the Undeliverable Entry is '1', the GGSN checks if the Undeliverable Entry is valid. This is done by comparing the time expired from when the Time Entry was made, against a configurable time value called TIME_UNDELIVERABLE_INFO_VALID. If the Undeliverable information is valid, the PDU is deleted (N.B. TIME_UNDELIVERABLE_INFO_VALID < TIME_SGSNADDRESS_INFO_VALID).

If the Undeliverable Entry is '0' or there is an Undeliverable Entry that is not valid, a PDU Notification Request message is sent to the SGSN address held in the Address Mapping Table. The process continues as described from the PDU Notification Request Procedure section. If there is no SGSN address present, the GGSN shall send **a Send Routing Information for GPRS message to the HLR** to get the location information about the MS. The process continues from the Send Routing Info for GPRS Procedure section.

If a PDP PDU arrives at the GGSN with the same PDP address as one for which a PDP context activation procedure is already in process, the newly arrived PDP PDU is buffered. When there is an outcome for the PDP context activation, the newly arrived PDP PDU can be delivered or deleted. Several PDP PDUs may be buffered simultaneously.

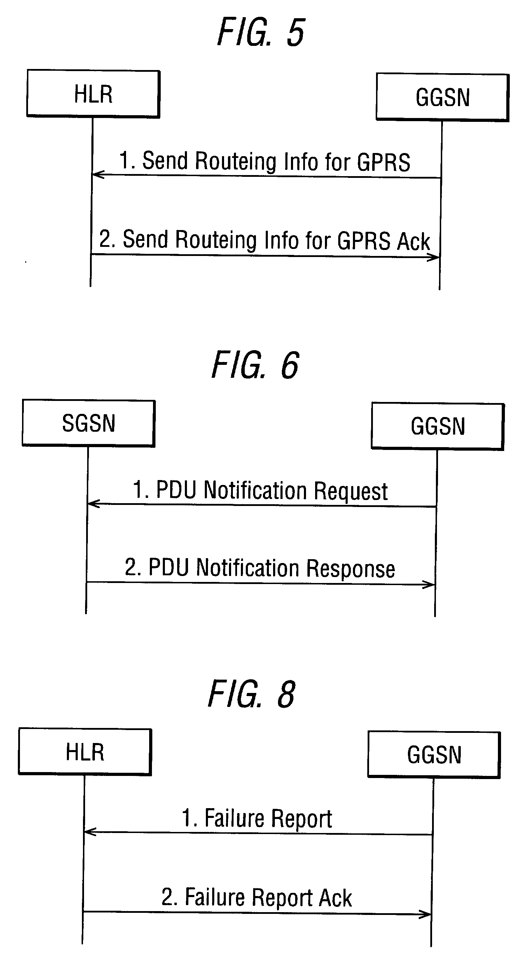

**Send Routing Info for GPRS Procedure (Figs. 4, 5) (The process described here begins when a PDP Context is not Active in the GGSN and the Network-Requested PDP Context Activation Procedure is enabled in the GGSN.**
1) The GGSN sends a Send Routing Info For GPRS message to the HLR. The HLR uses the IMSI contained in this message to find the location information for the mobile station. The HLR will send back a Send Routing Information for GPRS Acknowledgement message to the GGSN. If the acknowledgement cannot be received after the re-send procedure, the GGSN enters '1' in the Undeliverable flag in the Address Mapping Table with a new Time Entry, deletes the SGSN Address and deletes the PDU. This occurs for all PDP addresses with the same IMSI.
   If the GGSN receives a Create PDP Context Request after a Send Routing Information for GPRS Request has been sent for the IMSI of an MS with the same PDP address and APN, but before a Send Routing Information for GPRS Response has been received the GGSN handles the Create PDP Context Request as a normal context activation. The GGSN ignores the following Send Routing Information for GPRS Response and halts the Send Routing Information for GPRS Request re-send procedure.
2) When the acknowledgement is received, it contains the IMSI, SGSN Address and if an MNRG flag is set in the HLR, a Mobile Station Not Reachable Reason parameter (MNRR). If there is no MNRR in the message or the MNRR indicates 'No Paging Response', in the Address Mapping Table for all PDP Addresses with the same IMSI, the GGSN updates the SGSN Address and Time Entry, the Undeliverable Entry is set to '0'. Also, a PDU Notification Request is sent to the SGSN identified in the acknowledgement. The process continues as described from the **PDU Notification Request Procedure** section. However, if the SGSN identified is the same as one from which a PDU Notification Response has been received with cause 'IMSI Not Known' as part of the same Network-requested PDP context activation procedure, the GGSN sends a Failure Report to the HLR. The procedure continues as described from the **Failure Report** section. If the HLR responds with an acknowledgement with an MNRR other than 'No Paging Response', the PDU is deleted and in the Address Mapping Table, for all PDP Addresses with the same IMSI, the MNRG flag is set to '1' with a new Time Entry and the Undeliverable Entry is set to '0'. If the HLR responds with a User Error that indicates Absent Subscriber, System Failure, Data Missing, Unexpected Data Value or any Provider Error, then in the Address Mapping Table, for all PDP Addresses with the same IMSI, the Undeliverable Entry is set to '1' with a new Time Entry, the SGSN Address is deleted and the PDU is deleted. If the HLR responds with a User Error that indicates Unknown Subscriber, the PDU is deleted and all PDP Address entries in the Address Mapping Table are deleted for the IMSI that the message refers to.

### PDU Notification Request Procedure (Figs. 4, 6)

1) The GGSN sends a PDU Notification Request message to the SGSN that is identified in the Address Mapping Table, over the Gc interface. The SGSN will respond with a PDU Notification Response with one of the cause values, as described in GSM 09.60 §7.5.13. If the PDU Notification Response cannot be received after the PDU Notification Request re-send procedure, the PDU is deleted and in the Address Mapping Table, for all PDP Addresses with the same IMSI, the Undeliverable Entry is set to '1' with a new Time Entry and the SGSN Address is deleted.
   If the GGSN receives a Create PDP Context Request before a PDU Notification Response for the same PDP context, the GGSN handles the Create PDP Context Request as a normal context activation and ignores the following PDU Notification Response. Also, the PDU Notification Request re-send procedure is stopped.
2) If the SGSN cannot continue the PDP context activation, it sends a PDU Notification Response containing one of the following causes depending on the reason:
   - No Resources Available, Service not supported, GPRS Connection Suspended, Mandatory IE Incorrect, Mandatory IE Missing, Optional IE Incorrect, Invalid Message Format. If the GGSN receives a response with any of these causes or cause System Failure, Version Not Supported or Roaming Restriction, the GGSN deletes the PDU, and sets '1' for Undeliverable with a new Time Entry and deletes the SGSN address in the Address Mapping Table.
   - If the mobile station is not attached to the SGSN, the SGSN sends a PDU Notification Response with cause 'MS GPRS Detached'. The GGSN sends a Failure Report Request to the HLR. See Failure Report section.
   - If the SGSN has no record of a mobile station with the IMSI contained in the PDU Notification Request, the SGSN sends a PDU Notification Response with cause 'IMSI Not Known'. If the GGSN has already received a Send Routing Info for GPRS Acknowledgement message as part of the same Network-Requested PDP Context Activation procedure, the GGSN sends a Failure Report Request to the HLR. The procedure continues as described from the Failure Report section. If a Send Routing Info for GPRS Acknowledgement message has not just been received, the GGSN sends a Send Routing Info for GPRS message to the HLR. The procedure continues as described from the Send Routing Info for GPRS Procedure section.
   If none of the above problems prevent **PDP Context Activation,** the SGSN sends a PDU Notification Response to the GGSN that has cause 'Request Accepted' and sends a Request **PDP Context Activation** message to the MS. The process continues as described from the **PDP Context Activation** section. On receipt of a PDU Notification Response with cause 'Request Accepted', the GGSN starts a timer and waits for the PDP context to become active or for a PDU Notification Reject Request.
   If neither message is received after the timer has expired, the GGSN deletes the PDU and in the Address Mapping Table for all PDP Addresses with the IMSI, the GGSN updates the Time Entry and sets Undeliverable to '1'.
   If the SGSN receives a PDU Notification Request from a GGSN after a Create PDP Context Request has been sent to the same GGSN but before a Create PDP Context Response has been received for the same PDP context, the SGSN will only send a PDU Notification Response with Cause Request accepted' without any further processing and then wait for the Create PDP Context Response.

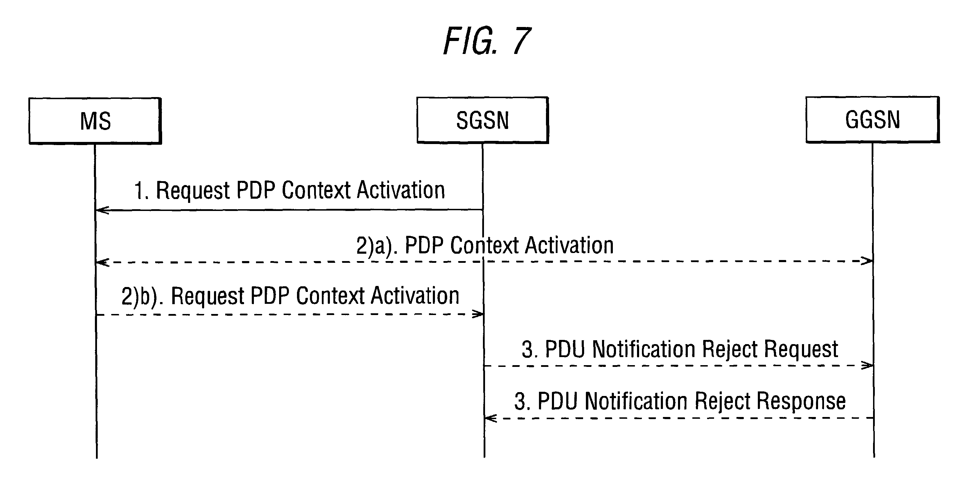

### PDP Context Activation (Fig. 7)

1) The SGSN sends a Request PDP Context Activation message to the MS. The procedure is as described in GSM 04.08 §6.1.3.1.2
2)
   a) The MS may start the PDP context activation as described in GSM 04.08 §6.1.3.1.2 in which case the PDP Context will become Active and the PDU can be delivered.
   b) Otherwise, the MS will respond with a Request PDP Context Activation Reject as described in GSM 04.08 §6.1.3.1.4. The message contains one of the cause codes specified in that section.
3) Upon receipt of a Request PDP Context Activation Reject message, the SGSN will send a PDU Notification Reject Request to the GGSN with cause 'MS Refuses'. The GGSN deletes the PDU and in the Address Mapping Table, for all PDP Addresses with the same IMSI the GGSN sets the Undeliverable to '1' with a new Time Entry. If the Request PDP Context Activation message transfer is unsuccessful (from step 1).) after the re-send procedure described in GSM 04.08§6.1.3.1.5, the SGSN sends a PDU Notification Reject Request to the GGSN with cause 'MS Not GPRS Responding'. In this case, the GGSN deletes the PDU and in the Address Mapping Table, for all PDP Addresses with the same IMSI, the GGSN sets '1' for the Undeliverable Entry with new Time Entry. After a PDU Notification Reject Request message has been received, the GGSN sends a PDU Notification Reject Response.

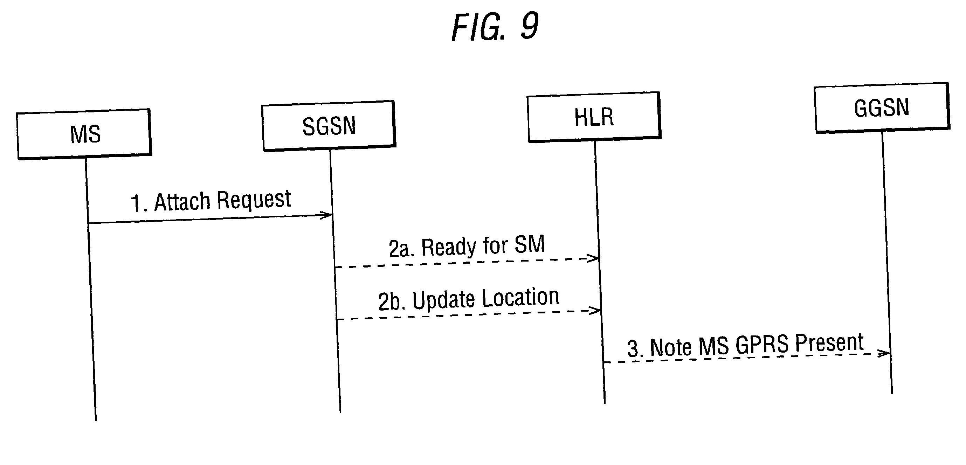

### Failure Report (Fig. 8)

1) The GGSN sends a Failure Report to the HLR, over the Gc interface. If the re-send procedure fails, then in the Address Mapping Table, for all PDP Addresses with the same IMSI, the Undeliverable Entry is set to '1', the SGSN Address is deleted and the Time entry is updated.
2) The HLR responds with a Failure Report Response. On receiving the Failure Report, the GGSN updates the Address Mapping Table for all PDP addresses with the IMSI number. The MNRG flag is set to '1', the Undeliverable Entry is set to '0' and the Time Entry is updated.

### The Mobile User Activity Procedure (Fig. 9)

1) The MS sends an Attach Request message to an SGSN.
2
   a) When an SGSN receives an Attach Request message, if the message contains an MM context of the MS and MNRG for that MS is set, it sends a Ready for SM message to the HLR and clears MNRG.
   2b) When an SGSN receives an Attach Request message, if it does not keep an MM context of the MS, it sends Ready for SM and Update Location messages to the HLR.
3) When the HLR receives the Ready for SM message or the Update Location message for an MS that has MNRG set, it clears MNRG for that MS and sends a Note MS GPRS Present message to all the GGSNs in the list of the subscriber. The SGSN Address information element contains the address of the SGSN that currently serves the MS. Upon reception of Note MS Present, each GGSN updates entries for each PDP Address with the IMSI contained in the message. The MNRG and Undeliverable Entries are set to '0' and the SGSN Address is updated with a new Time Entry.

### Management of the Address Mapping Table

Entries are initially made into the GGSN from the Activate PDP Context Request Procedure initiated by the MS for static PDP Addresses. During the PDP context activation procedure, the SGSN sends a Create PDP Context Request to the GGSN. If a static PDP address is used for this, each time a Create PDP Context message is received, the GGSN checks for an entry for that PDP Address in the table that also has the same APN. If there is no entry in the table for the PDP Address with the same APN, a new entry for the PDP Address will be made. All other entries corresponding to this address are also made:

If there is already an entry for the PDP Address/APN combination, the IMSI information about it is checked. The PDP Address contained in the message and the IMSI contained in the TID part of the GTP header should be the same as the values in the table. If the mapping is different, all entries for that PDP Address will be deleted. At this point, a new entry is made to the Address Mapping Table for the PDP Address and corresponding entries as described above.

The table below indicates how entries in the Address Mapping Table are updated. The GGSN will update entries for PDP addresses every time one of the messages listed in the table is received. When one of these messages is received, the PDP address is looked up and entries for that PDP address are modified. Information is also updated for all PDP addresses with the same IMSI as the PDP address that the message relates to. If there is no entry for the PDP address, the update will be ignored unless it is a Create PDP Context Request. In this case, a new entry will be made for the PDP Address entry as described above. The OMC-G may instruct the deletion of PDP Address entries or all PDP Address entries that relate to an IMSI. Blank cells in the table indicate that no change be made for that entry in the Address Mapping Table.

| **Message Received/Message Procedure** | **SGSN Address** | **Time Entry** | **MNRG flag** | **Undeliverable Entry** |
|---|---|---|---|---|
| Create PDP Context Request (if the message is for a static IP address) | Update | Update | Set to '0' | Set to '0' |
| If a PDU Notification Request is sent to an SGSN and no PDU Notification Response is received after the re-send procedure | Delete | Update | | Set to '1' |
| PDU Notification Response with cause * | Delete | Update | | Set to '1' |
| PDU Notification Response with cause 'Request Accepted' is received and after T_NOT_RESP has expired, the context has not become active or the PDU Notification Reject Request message has not been received | | Update | | Set to '1' |
| PDU Notification Reject Request with cause 'MS Refuses' | | Update | | Set to '1' |
| PDU Notification Reject Request with cause 'MS Not GPRS Responding' | | Update | | Set to '1' |
| Update PDP Context Request | Update | Update | Set to '0' | Set to '0' |
| MAP_SEND_ROUTING_INFO_FOR_GPRS Response with an MNRR that is not 'No Paging Response' | | Update | Set to '1' | Set to '0' |
| MAP_NOTE_MS_PRESENT_FOR_GPRS message | Update | Update | Set to '0' | Set to '0' |
| MAP_SEND_ROUTING_INFORMATION_FOR _GPRS response with a User Error Cause Absent Subscriber, System Failure, Data Missing or Unexpected Data Value | Delete | Update | | Set to '1' |
| MAP_SEND_ROUTING_INFORMATION_FOR _GPRS response with a User Error Cause 'Unknown Subscriber' ** | Delete | Delete | Delete | Delete |
| MAP_SEND_ROUTING_INFORMATION_FOR GPRS response with a Provider Error | Delete | Update | | Set to '1' |
| If the MAP_SEND_ROUTING_INFORMATION_FOR GPRS re-send procedure fails | Delete | Update | | Set to '1' |
| Send Routing Info for GPRS Acknowledgement with no MNRR or an MNRR that reads 'No Paging Response' | Update | Update | | Set to '0' |
| MAP FAILURE REPORT Response | | Update | Set to '1' | Set to '0' |
| No MAP_FAILURE_REPORT Response received after the re-send procedure | Delete | Update | | Set to '1' |

| | | | | |
|---|---|---|---|---|
| * - 'No Resources Available', 'Service Not Supported', 'System Failure', 'GPRS Connection Suspended', 'Mandatory IE Incorrect', 'Mandatory IE Missing', 'Optional IE Incorrect', 'Invalid Message Format', 'Version Not Supported', or 'Roaming Restriction' | | | | |
| **- If a MAP_SEND_ROUTING_INFORMATION_FOR_GPRS response with a Map Error Cause "Unknown Subscriber' is received by the GGSN then all PDP address entries with that IMSI are deleted. | | | | |

## Claims

1. In a mobile telecommunications system providing packet switched services, a method of connecting mobile stations (MS) to a packet data network (PDN) external to the system, comprising:
providing a gateway control means (GGSN) which receives packet data units (PDU) from the external data network for routing to a selected mobile station;
providing the selected mobile station with a system address (IMSI) for enabling the gateway control means to establish a connection with the mobile station, and a packet address (PDP) to enable packet data units to be routed to the mobile station; and
the gateway control means obtaining and storing information linking the system address of each mobile station with a respective packet address, the information being obtained from requests initiated by the mobile stations for external packet data services.

2. In a mobile telecommunications system providing packet switched services, a method of connecting mobile stations (MS) to a packet data network (PDN) external to the system, comprising:
providing a gateway control means (GGSN) which receives packet data units (PDU) from the external data network for routing to a selected mobile station;
providing the selected mobile station with a system address (IMSI) for enabling the gateway control means to establish a connection with the mobile station, and a packet address (PDP) to enable packet data units to be routed to the mobile station; and
providing the gateway control means with a table means identifying mobile stations within the system and linking the system address of each mobile station with a respective packet address.

3. A method according to any preceding Claim, wherein the system address of each mobile station is an international mobile subscriber identity (IMSI) number.

4. A method according to any preceding Claim, wherein said packet address is a static IP address.

5. A method according to any preceding Claim, wherein the information stored in the gateway control means is created as a result of individual mobile stations initiating the creation of a packet data protocol context for receiving required data services from external networks, in which the individual mobile stations transmit their system address to the gateway control means.

6. A method according to any preceding Claim, wherein the gateway control means, having received a PDU, checks whether the packet address relates to an active packet procedure, and obtains the system address for a mobile station from its stored information.

7. A method according to claim 6, wherein the gateway control means initiates the creation of an active packet procedure, if no valid procedure currently exists, including obtaining the system address for the mobile station.

8. A method according to any preceding claim, including checking whether the address for a support control means (SGSN) is valid; and if the address is not valid, the gateway control means obtaining routing information from home location register means (HLR).

9. A method according to any of Claims 8 or 9, wherein the gateway control means initiates a packet data unit notification request procedure towards support control means (SGSN) to enable activation of a PDP context.

10. A method according to Claim 9, wherein the gateway control means, the support control means, and the mobile station cooperate to create a PDP context for transmission of the packet data unit to its PDP address.

11. A method according to any preceding Claim, wherein the gateway control means includes a table means including system addresses for mobile stations together with respective packet addresses, and in addition, address for a support control means (SGSN) linking the gateway control means to the selected mobile station, and time of when an entry is made to the table means.

12. A method according to claim 11, wherein the table means includes information as to whether a mobile station can be reached for packet services, and/or whether previous attempts at delivering packet data units have failed.

13. A method according to any preceding Claim, wherein the gateway control means includes a table means including system addresses for mobile stations together with respective packet addresses, and in addition, access point identifiers(APN) for identifying the external networks.

14. A method according to Claim 13, wherein the table means is indexed according to system address and to packet address/ access point identifier combination.

15. A method according to Claim 11, wherein selected items of the table means relating to the SGSN are updated in response to information received in messages in the procedure set forth in any of Claims 7 to 10.

16. In a mobile telecommunications system providing packet switched services, apparatus for connecting mobile stations to an external data network (PDN), comprising:
a gateway control means (GGSN) for receiving packet data units (PDU), from the external data network for routing to a selected mobile station;
the selected mobile stations having a system address (IMSI) for establishing connection with the gateway control means and, the system having a facility for associating a packet address with the selected mobile station for a selected packet data service; and
the gateway control means including a table means for the mobile stations, which maps the system address to the or each packet address associated with each mobile station, together with an access point identifier employed in the system for the external data network.

17. Apparatus as claimed in Claim 16 wherein the table means is indexed according to system address and to packet address/ access point identifier combination.

18. Apparatus as claimed in Claim 16 or 17, wherein the table means is compiled from information obtained by the gateway control means when mobile stations initiate procedures for establishing a connection for data services from an external data network.

19. Apparatus as claimed in Claim 16, 17 or 18, wherein the table means includes system addresses for mobile stations together with respective packet addresses, and in addition, address for a support control means (SGSN) linking the gateway control means to the selected mobile station, and time entry of when an entry is made to the table means.

20. Apparatus as claimed in Claim 19, wherein the table means includes information as to whether a mobile station can be reached for packet services, and/or whether previous attempts at delivering packet data units have failed.

21. A method or apparatus as claimed in any preceding claim, wherein the system is GSM including GPRS, the gateway control means is a GGSN, and the packet address is a PDP address for a PDP context.
